# EUROPÄISCHE PATENTSCHRIFT

(11) **EP 2 710 241 B1**
(45) Veröffentlichungstag und Bekanntmachung des Hinweises auf die Patenterteilung: **19.10.2016**
(21) Anmeldenummer: 12720523.5
(22) Anmeldetag: 15.05.2012
(51) Int. Cl.: F01N 3/20, F01N 11/00, G01N 27/06, G01N 27/07

(54) **VORRATSBEHÄLTER FÜR EINE FLÜSSIGKEIT**
STORAGE VESSEL FOR A LIQUID
RÉSERVOIR POUR LIQUIDE

(30) Priorität: 20.05.2011 DE 102011102698
(43) Veröffentlichungstag der Anmeldung: 26.03.2014
(73) Patentinhaber: Continental Automotive GmbH, 30165 Hannover (DE)
(72) Erfinder: GRASS, Philippe, 93053 Regensburg (DE); WEIGL, Manfred, 93161 Sinzing / Viehhausen (DE)
(86) Internationale Anmeldenummer: PCT/EP2012/058998
(87) Internationale Veröffentlichungsnummer: WO 2012/159934

(56) Entgegenhaltungen:
- DE-A1-102009 004 936
- Endress + Hauser conducta GmbH: "Technische Information - Condumax W CLS21 und CLS21D - Leitfähigkeitssensoren", , 30. Juli 2007 (2007-07-30), XP55034289, Gefunden im Internet: URL:http://www.namur.de/fileadmin/media/Pr essespiegel/atp/atp_01_2009_Sensortechnik. pdf [gefunden am 2012-07-31]
- Wolfgang Babel ET AL: "Fortschritte in der Sensortechnik entlang der Technologie-Roadmap", , 28. Februar 2009 (2009-02-28), Seiten 100-107, XP55034284, Gefunden im Internet: URL:http://www.namur.de/fileadmin/media/Pr essespiegel/atp/atp_01_2009_Sensortechnik. pdf [gefunden am 2012-07-31]

## Beschreibung

Die Erfindung betrifft einen Vorratsbehälter für eine Flüssigkeit mit einer Anordnung zum Messen der elektrischen Leitfähigkeit der im Behälter befindlichen Flüssigkeit und ein Verfahren hierzu, wie z.B. in der DE 10 2009 004 936 A1 offenbart.

Aus dem Stand der Technik sind Vorratsbehälter für wässrige Harnstofflösungen bekannt, die Messeinrichtungen aufweisen, mit denen die elektrische Leitfähigkeit der darin befindlichen Flüssigkeiten konduktiv gemessen wird. Wässrige Harnstofflösung wird beispielsweise in SCR-Systemen (Selective Catalytic Reduction Systeme) verwendet, um in einem katalytischen Prozess den Anteil der Stickoxide im Abgas von Dieselaggregaten zu reduzieren. Mit der Bestimmung der Leitfähigkeit der Harnstofflösung kann beispielsweise der Alterungszustand beziehungsweise die Qualität der Lösung festgestellt werden. Leitfähigkeitsmessungen der Harnstofflösung werden auch durchgeführt, um den Füllstand der Flüssigkeit im Behälter zu ermitteln.

Bei den bekannten Vorratsbehältern werden mindestens zwei Elektroden durch die Gehäusewand geführt, die mit der Flüssigkeit in leitendem Kontakt stehen. Um zu verhindern, dass an den Durchführungen der Elektroden Flüssigkeit aus dem Behälter entweicht, werden diese Durchführungen mit O-Ringen abgedichtet.

Zur Messung der Leitfähigkeit wird zwischen den Kontakten des Vorratsbehälters eine elektrische Spannung angelegt. Sofern die Flüssigkeit elektrisch leitfähig ist, werden die Kontakte durch die Flüssigkeit leitend miteinander verbunden, und aufgrund des elektrischen Feldes fließt zwischen den Elektroden ein Strom. Die Stromstärke ist dabei repräsentativ für die Leitfähigkeit der Flüssigkeit.

Um die elektrische Verbindung zwischen dem Vorratsbehälter und einer Messelektronik herzustellen, werden Steckersysteme oder lösbare Kabelverbindungen verwendet. Im Reparatur- oder Servicefall werden diese Verbindungen zunächst gelöst und anschließend wieder befestigt.

Problematisch bei den bekannten Vorratsbehältern ist das Auftreten von Undichtigkeiten beziehungsweise Leckagen an den Durchführungen der Elektroden, die z. B. durch mechanische Belastung hervorgerufen werden. Solche Belastungen treten z. B. durch Vibrationen am Aufstellort des Behälters oder mehrfaches Lösen der Kabelverbindungen auf.

Da diese Behälter in SCR-Systemen verstärkt Vibrationen und Kabelbewegungen ausgesetzt sind, kommt es auch zu Materialermüdung in den Verbindungskabeln, was zu Wackelkontakten oder Kabelbruch führt.

Der Erfindung liegt die Aufgabe zugrunde, einen Vorratsbehälter für Flüssigkeiten mit einer Anordnung zum Messen der elektrischen Leitfähigkeit der in dem Behälter befindlichen Flüssigkeit und ein Verfahren zur Messung der elektrischen Leitfähigkeit bereitzustellen, bei dem der Vorratsbehälter besonders einfach und robust aufgebaut ist und das Verfahren einfach und zuverlässig durchführbar ist.

Erfindungsgemäß wird die Aufgabe durch einen Vorratsbehälter mit den Merkmalen aus Anspruch 1 gelöst. Vorteilhafte Ausgestaltungen bilden den Gegenstand der Unteransprüche.

Der erfindungsgemäße Vorratsbehälter für eine Flüssigkeit hat eine Anordnung zum Messen der elektrischen Leitfähigkeit der in dem Behälter befindlichen Flüssigkeit, wobei die Anordnung einen ersten Kontakt und einen zweiten Kontakt aufweist, die von der Flüssigkeit benetzt werden und zwischen denen die Leitfähigkeit gemessen wird. Der Vorratsbehälter weist eine erste Leiterschleife mit einem ersten offenen Ende auf, das mit dem ersten Kontakt elektrisch gekoppelt ist, und einem zweiten offenen Ende, das mit dem zweiten Kontakt elektrisch gekoppelt ist. Sofern die Kontakte von einer elektrisch leitenden Flüssigkeit benetzt und verbunden sind, fließt mit Anlegen einer elektrischen Spannung zwischen den Kontakten ein Strom. Die Stromstärke zwischen den Kontakten ist dabei abhängig von der Leitfähigkeit der Flüssigkeit. Durch Auswerten der Stromstärke kann auf die Leitfähigkeit der Flüssigkeit geschlossen werden.

Die erste Leiterschleife des Vorratsbehälters dient der Vermittlung eines elektrischen Feldes an die Kontakte des Vorratsbehälters, und insbesondere wird mithilfe dieser ersten Leiterschleife eine elektrische Spannung zwischen den Kontakten erzeugt. Die Form der ersten Leiterschleife kann dabei unterschiedliche Geometrien aufweisen. Die erste Leiterschleife kann rund sein, das heißt die Form eines Teil-, Halb- oder Vollkreises bilden. Denkbar ist, dass die erste Leiterschleife eine Spule mit mindestens einer Windung ist. Die Funktion der ersten Leiterschleife kann genauso mit anderen Formen erzielt werden. Beispielsweise könnte die erste Leiterschleife eine rechteckige oder polygonale Form aufweisen. Denkbar ist auch, dass die erste Leiterschleife ein gerader oder gekrümmter Leiter ist.

Die erste Leiterschleife wird durch einen offenen Leiter gebildet, das heißt, sie ist nicht geschlossen und weist zwei offene Enden auf. Die offenen Enden der ersten Leiterschleife sind elektrisch mit den Kontakten des Vorratsbehälters gekoppelt. Die Enden können dazu unmittelbar mit den Kontakten elektrisch verbunden sein. Für eine indirekte Kopplung können aber auch weitere elektrotechnische Komponenten wie z. B. Kondensatoren oder Widerstände zwischen den offenen Enden und den Kontakten eingesetzt sein.

Im Gegensatz zu herkömmlichen Vorratsbehältern mit Anordnungen zum Messen der elektrischen Leitfähigkeit von Flüssigkeiten, ist bei dem erfindungsgemäßen Behälter eine Durchkontaktierung der Kontakte zu externen Messeinrichtungen durch das Behältergehäuse nicht erforderlich. Es sind also keine Durchbrüche notwendig, um eine Verbindung zu den Kontakten und einer Messelektronik herzustellen. Eine Abdichtung von Durchbrüchen oder Durchbohrungen mit O-Ringen ist somit ebenfalls nicht erforderlich.

In einer Ausgestaltung weist der Vorratsbehälter eine zweite Leiterschleife zur Induktion einer Spannung in die erste Leiterschleife auf. Die zweite Leiterschleife dient der Erzeugung eines Magnetfelds, mit dem eine Spannung in die erste Leiterschleife induziert werden kann. Dazu wird die zweite Leiterschleife mit einer Eingangsspannung angeregt. Durch eine Änderung der Amplitude der Eingangsspannung in Abhängigkeit der Zeit wird mit der zweiten Leiterschleife ein sich änderndes magnetisches Feld erzeugt. Wird die erste Leiterschleife von diesem Feld durchsetzt, führt dies zur Induktion einer Spannung in die erste Leiterschleife. Analog zur ersten Leiterschleife sind auch für die zweite Leiterschleife unterschiedliche Formen denkbar. Die zweite Leiterschleife kann z. B. als Spule mit mindestens einer Windung ausgebildet sein.

In einer weiteren Ausgestaltung des Vorratsbehälters ist die zweite Leiterschleife zur Bestimmung der Leitfähigkeit der Flüssigkeit an eine Messelektronik gekoppelt. Eine Kopplung bedeutet, dass die zweite Leiterschleife und die Messelektronik unmittelbar elektrisch verbunden sein können, z. B. durch eine Kabelverbindung, alternativ kann die zweite Leiterschleife aber auch anders, z. B. induktiv oder kapazitiv, an die Messelektronik gekoppelt sein.

Die Messelektronik kann zwei Funktionen erfüllen. In ihrer ersten Funktion dient die Messelektronik der Einspeisung einer Eingangsspannung in die zweite Leiterschleife, um somit ein Magnetfeld mit der zweiten Leiterschleife zu erzeugen. Die Eingangsspannung kann beispielsweise eine Wechselspannung sein oder eine Abfolge von Spannungspulsen. In ihrer zweiten Funktion dient die Messelektronik der Bestimmung und Auswertung des Stromflusses in der ersten Leiterschleife, der durch die Induzierung einer Spannung in diese erzeugt wird.

Die induktive Einkopplung der Energie zum Messen der Leitfähigkeit führt dazu, dass in dem Gehäuse des Versorgungsbehälters keine zusätzliche Energiequelle wie z. B. eine Batterie untergebracht sein muss. Ein Vorteil der induktiven Kopplung zwischen den Leiterschleifen besteht auch darin, dass sowohl der Vorratsbehälter als auch die Messelektronik beziehungsweise die zweite Leiterschleife, bei Bedarf einfach ausgetauscht werden können, ohne dass eine Kabel- oder Steckverbindung zwischen der Anordnung zum Messen der Leitfähigkeit und der Messelektronik gelöst werden muss.

Durch die Abwesenheit einer Kabelverbindung werden mechanische Fehlfunktionen von elektrischen Leitern, wie z. B. Wackelkontakte oder Kabelbruch, ausgeschlossen.

In einer weiteren Ausgestaltung ist die zweite Leiterschleife in ein Gehäuse integriert, wobei das Gehäuse von dem Gehäuse des Vorratsbehälters separierbar ist. Denkbar ist z. B., dass die zweite Leiterschleife in ein schützendes Material eingegossen wird. Das Gehäuse könnte z. B. in ein Fahrzeug eingebaut oder Teil eines SCR-Systems sein. Es ist hierbei nicht erforderlich, dass die Messelektronik in der Nähe der zweiten Leiterschleife angeordnet ist. Denkbar ist, dass die Messelektronik in die Systemelektronik eines SCR-Systems integriert ist. Gegenüber den herkömmlichen Vorratsbehältern in SCR-Systemen ist die einfache Austauschbarkeit des erfindungsgemäßen Behälters oder der Messelektronik von großem Vorteil im Hinblick auf einfache und schnelle Service- oder Reparatureinsätze.

In einer weiteren Ausgestaltung weist der Vorratsbehälter erste Führungsmittel und das Gehäuse zweite Führungsmittel auf, zur Positionierung der zweiten Leiterschleife in einer vorgegebenen Anordnung zur ersten Leiterschleife. So kann eine Betriebsposition der zweiten Leiterschleife relativ zur ersten Leiterschleife eingestellt werden, die eine optimale induktive Kopplung zwischen den Leiterschleifen bewirkt.

In einer weiteren Ausgestaltung ragen die Kontakte in die Flüssigkeit hinein und stehen mit dieser in elektrisch leitendem Kontakt. Die Kontakte können ohne Einschränkung ihrer Funktion auch flächig in einer Ebene mit einer Behälterwand liegen oder in Vertiefungen der Behälterwand vorgesehen sein. Wesentlich ist jedenfalls, dass die Kontakte von der Flüssigkeit benetzt werden. Die Kontakte können am Boden des Behälters oder an den Seitenwänden des Vorratsbehälters angeordnet sein.

In einer weiteren Ausgestaltung ist die erste Leiterschleife in eine Wand des Vorratsbehälters eingebettet. Die Einbettung der ersten Leiterschleife dient zum einen dem Schutz des Leitermaterials gegen den Kontakt mit der Flüssigkeit im Behälter und zum anderen der Fixierung der ersten Leiterschleife in einer vorbestimmten Position. Durch die Einbettung wird die erste Leiterschleife beispielsweise gegen Korrosion und Kurzschluss geschützt. Die erste Leiterschleife kann in einer ebenen Fläche liegen oder einer Kontur des Gehäuses des Vorratsbehälters angepasst sein. Die Integration der ersten Leiterschleife in die Behälterwandung kann z. B. bei der Herstellung des Behälters im Spritzgussverfahren durchgeführt werden. Die erste Leiterschleife kann auch in Form einer gedruckten Elektronik bei der Herstellung des Behälters in die Wandung integriert werden. Denkbar ist weiterhin, dass auch die zweite Leiterschleife in die Wandung des Vorratsbehälters integriert ist.

Falls Teile der ersten Leiterschleife in Kontakt mit der Flüssigkeit stehen, kann ein geeignetes Isolationsmaterial zum Schutz der ersten Leiterschleife gegen Kurzschluss oder Korrosion eingesetzt werden.

Es ist nicht erforderlich, dass die erste Leiterschleife in der Nähe der Kontakte angeordnet ist. Denkbar ist z. B., dass die Kontakte am Boden des Vorratsbehälters angeordnet sind und die erste Leiterschleife in einer Seitenwand angeordnet ist.

In einer Ausgestaltung weist eine Wand des Vorratsbehälters im Bereich der ersten Leiterschleife eine elektrische Leitfähigkeit auf, die geringer ist, als die elektrische Leitfähigkeit einer Flüssigkeit, deren Leitfähigkeit gemessen werden soll. Insbesondere kann sie um einen Faktor 10 oder mehr geringer sein. Die Flüssigkeit, deren Leitfähigkeit gemessen werden soll, ist eine Flüssigkeit, für die der Vorratsbehälter in seiner Verwendung vorgesehen ist. Die Leitfähigkeit dieser Flüssigkeit kann beispielsweise 2 mS/cm betragen. Insbesondere beträgt der Leitwert wässriger Harnstofflösung unter normalen Bedingungen (Raumtemperatur, keine Alterung) ca. 2 mS/cm.

Häufig werden für Vorratsbehälter dieser Art elektrisch nicht oder schlecht leitfähige Materialien, wie z. B. Kunststoffe, verwendet. Es kann jedoch vorteilhaft sein, dass der Vorratsbehälter oder Teile davon elektrisch leitfähige Materialien wie z. B. leitfähige Kunststoffe, Metalle oder Legierungen aufweist. Auf diese Weise wird einer statischen Aufladung des Behälters oder Teilen davon entgegengewirkt. Es ist auch möglich einen leitfähigen Vorratsbehälter, beispielsweise aus Aluminium oder einem anderen Metall, im Bereich der ersten Leiterschleife mit einem Einsatz aus einem Material mit geringer Leitfähigkeit zu versehen.

Eine weitere Möglichkeit, statischen Aufladungen entgegenzuwirken, besteht darin, den Vorratsbehälter ganz oder teilweise mit einem elektrisch leitfähigen Material einzuhüllen oder zu umgeben.

Eine geringere Leitfähigkeit des Materials des Vorratsbehälters im Bereich der ersten Leiterschleife kann die induktive Kopplung zwischen erster und zweiter Leiterschleife begünstigen.

In einer weiteren Ausgestaltung weisen die erste und die zweite Leiterschleife jeweils eine Längsachse auf, die in einer Betriebsposition im Wesentlichen parallel zueinander angeordnet sind. Jede Längsachse ist eine Symmetrieachse der jeweiligen Leiterschleife, insbesondere eine Achse, um die eine Windung der jeweiligen Leiterschleife herum gewickelt ist. Sie können mit der Hauptrichtung eines von einem Stromfluss in der jeweiligen Leiterschleife erzeugten Magnetfeldes zusammenfallen. Diese Anordnung gewährleistet eine möglichst gute induktive Kopplung der beiden Leiterschleifen. Allgemein ist für eine gute induktive Kopplung vorgesehen, dass in einer Betriebsposition die Feldlinien des mit der zweiten Leiterschleife erzeugten Magnetfeldes im Wesentlichen senkrecht auf dem Leiter oder einer von der ersten Leiterschleife eingeschlossenen Fläche stehen. Eine schräge oder winklige Lage der Achsen der Leiterschleifen ist denkbar, sofern eine induktive Kopplung in dieser Lage noch realisierbar ist.

In einer Ausgestaltung sind die erste und zweite Leiterschleife in einer Betriebsposition koaxial zueinander angeordnet. Diese Anordnung gewährleistet eine optimale induktive Kopplung der Leiterschleifen. Die zweite Leiterschleife kann parallel zur ersten Leiterschleife oder innerhalb der ersten Leiterschleife angeordnet sein. Dies lässt sich beispielsweise dadurch realisieren, dass in dem Gehäuse des Vorratsbehälters eine entsprechende Vertiefung beziehungsweise Kontur oder Durchführung ausgebildet ist, in der die zweite Leiterschleife in ihrer Betriebsposition angeordnet wird. Die erste Leiterschleife ist dafür beispielsweise angrenzend an diese Vertiefung beziehungsweise Kontur oder Durchführung in der Gehäusewandung angeordnet.

In einer Ausgestaltung ist der Vorratsbehälter ein Tank in einem Fahrzeug. Denkbar ist auch, dass der Vorratsbehälter in einem Lager oder an einer Befüllstation eingesetzt wird.

In einer weiteren Ausgestaltung wird der Vorratsbehälter in einem SCR-System eingesetzt. Beispielsweise wird der Vorratsbehälter für wässrige Harnstofflösung eingesetzt und wird dazu verwendet, die elektrische Leitfähigkeit oder andere damit verknüpfte Eigenschaften der Harnstofflösung zu bestimmen und auszuwerten.

Die oben genannte Aufgabe wird ebenfalls gelöst durch das Verfahren mit den Merkmalen des Anspruchs 12. Vorteilhafte Ausgestaltungen des Verfahrens sind in den sich anschließenden Unteransprüchen angegeben.

Das Verfahren dient zum Messen der Leitfähigkeit einer Flüssigkeit in einem Vorratsbehälter mit den oben erläuterten Merkmalen. Es weist die folgenden Schritte auf:
- Induzieren einer Spannung in die erste Leiterschleife,
- Bestimmen der Leitfähigkeit der Flüssigkeit durch Auswerten eines Induktionsstroms in der ersten Leiterschleife.

In dem erfindungsgemäßen Verfahren wird eine Spannung in die erste Leiterschleife induziert, indem die erste Leiterschleife oder die davon eingeschlossene Fläche mit einem Magnetfeld durchsetzt wird. Die Leitfähigkeit kann beispielsweise als Zahlenwert oder als relative Angabe bestimmt werden. Möglich ist auch, dass mit der Bestimmung der Leitfähigkeit lediglich ein repräsentativer Wert für die Über- oder Unterschreitung eines vorgegebenen Grenzwertes bestimmt wird. Es ist auch denkbar, dass statt der elektrischen Leitfähigkeit der elektrische Widerstand der Flüssigkeit bestimmt wird.

Im Gegensatz zu herkömmlichen Methoden in SCR-Systemen kann mit dem erfindungsgemäßen Verfahren die Leitfähigkeit der Flüssigkeit bestimmt werden, ohne dass eine Kabelverbindung zwischen Auswerteeinheit und Vorratsbehälter erforderlich ist. Weiterhin werden für dieses Verfahren keine aktiven Bauelemente wie z. B. Transistoren oder integrierte Schaltkreise an der ersten Leiterschleife benötigt. Auch eine Energiequelle, wie z. B. eine Batterie, die direkt, das heißt mithilfe von elektrischen Leitern mit der ersten Leiterschleife verbunden ist, wird in dieser Vorrichtung und mit diesem Verfahren nicht benötigt. Die elektrische Leitfähigkeit oder andere Eigenschaften der Flüssigkeit werden gemessen, um Grenzwerte oder Füllstände der Flüssigkeit oder des Behälters zu überwachen.

Die induktive Kopplung der Messanordnung schafft im Hinblick auf bekannte Verfahren einerseits Sicherheit gegen mechanische Fehlfunktionen durch Kabelbruch oder Materialermüdung, und andererseits wird auch die Gefahr eines Falschanschlusses der Messanordnung ausgeräumt. Damit bietet dieses Verfahren und die Vorrichtung Schutz gegen Verpolung.

In einer Ausgestaltung des Verfahrens wird das Induzieren einer Spannung in die erste Leiterschleife durch Erzeugen eines Magnetfelds mit einer zweiten Leiterschleife realisiert.

In einer weiteren Ausgestaltung des erfindungsgemäßen Verfahrens wird das Auswerten des Induktionsstromes mithilfe einer Messelektronik realisiert, die mit der zweiten Leiterschleife verbunden ist.

Die vorliegende Erfindung wird nachfolgend anhand eines Ausführungsbeispiels näher erläutert.

Die einzige Figur zeigt eine schematische Darstellung eines erfindungsgemäßen Vorratsbehälters mit einer ersten und einer zweiten Leiterschleife.

In allen Figuren werden für sich entsprechende Teile die gleichen Bezugszeichen verwendet.

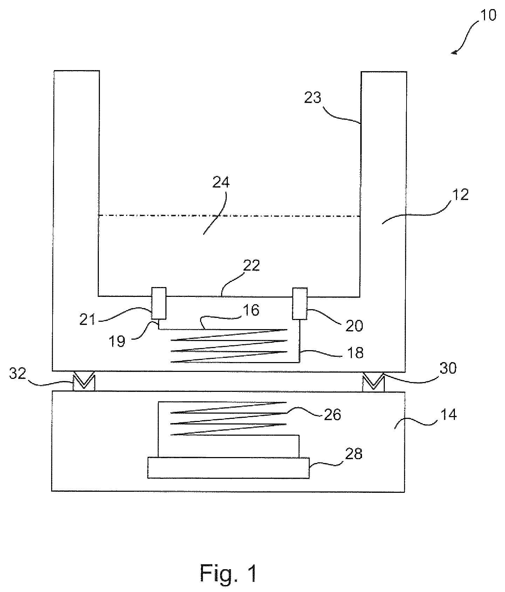

Figur 1 zeigt einen Vorratsbehälter 10 mit einer Anordnung zum Messen der Leitfähigkeit der im Behälter befindlichen Flüssigkeit 24. Der Vorratsbehälter 10 besitzt ein die Flüssigkeit 24 einschließendes Gehäuse 12 mit einem Behälterboden 22 und Seitenwänden 23. Das Gehäuse 12 kann mindestens eine Öffnung aufweisen, die z. B. zum Befüllen oder für einen Druckausgleich des Vorratsbehälters 10 dienen. Eine Öffnung kann auch zum Auslassen oder Entnehmen der Flüssigkeit dienen. In Fig. 1 ist das Gehäuse 12 nach oben hin offen dargestellt, in einer weiteren Ausführungsform weist das Gehäuse 12 eine Deckelwandung auf (nicht dargestellt), die den Vorratsbehälter 10 nach oben hin verschließt.

Um z. B. die Außenmaße des Vorratsbehälters 10 an die Einbaumaße des vorgesehenen Einbauplatzes anzupassen, kann die Kontur des Gehäuses 12 in unterschiedlichen Formen ausgebildet sein. Das Gehäuse 12 kann Vorrichtungen und Mittel zum Befestigen des Gehäuses 12 an umliegenden Konstruktionen aufweisen (nicht dargestellt). In den Boden 22 des Gehäuses 12 ist eine erste Leiterschleife 16 eingebettet, die mit ihrem ersten offenen Ende 18 an den ersten Kontakt 20 und mit ihrem zweiten offenen Ende 19 an den zweiten Kontakt 21 gekoppelt ist. Die erste Leiterschleife 16 ist hier zentral im Boden 22 angeordnet. Die erste Leiterschleife kann ebenso in einer der Seitenwände 23 oder in der Flüssigkeit 24 angeordnet sein (hier nicht dargestellt). Die Kontakte 20, 21 befinden sich am Boden 22 des Gehäuses 12 und ragen in die Flüssigkeit 24 hinein.

Weiterhin gibt es ein Gehäuse 14, das unterhalb des Gehäuses 12 angeordnet ist. In das Gehäuse 14 ist eine zweite Leiterschleife 26 integriert, die mit einer Messelektronik 28 verbunden ist, die ebenfalls in dem Gehäuse 14 angeordnet ist. Erste Führungsmittel 30, zugehörig zum Gehäuse 12, und zweite Führungsmittel 32, zugehörig zum Gehäuse 14, wirken zusammen, um die Gehäuse 12 und 14 in einer vorgegebenen Anordnung zu positionieren. In dieser Anordnung ist die erste Leiterschleife 16 koaxial zur zweiten Leiterschleife 26 angeordnet.

## Patentansprüche

1. Vorratsbehälter (10) für eine Flüssigkeit mit einer Anordnung zum Messen der elektrischen Leitfähigkeit der in dem Behälter befindlichen Flüssigkeit, wobei die Anordnung einen ersten Kontakt (20) und einen zweiten Kontakt (21) aufweist, die von der Flüssigkeit (24) benetzt werden und zwischen denen die Leitfähigkeit gemessen wird, **dadurch gekennzeichnet, dass** eine zweite Leiterschleife (26) zur Induktion einer Spannung in eine erste Leiterschleife (16) vorhanden ist, wobei der Vorratsbehälter (10) die erste Leiterschleife (16) mit einem ersten offenen Ende (18) aufweist, das mit dem ersten Kontakt (20) elektrisch gekoppelt ist, und einem zweiten offenen Ende (19), das mit dem zweiten Kontakt (21) elektrisch gekoppelt ist, und die zweite Leiterschleife (26) zur Bestimmung der Leitfähigkeit der Flüssigkeit an eine Messelektronik (28) gekoppelt ist, die zur Bestimmung und Auswertung des Stromflusses in der ersten Leiterschleife (16) dient.

2. Vorratsbehälter nach Anspruch nach Anspruch 1, **dadurch gekennzeichnet, dass** die zweite Leiterschleife (26) in ein Gehäuse (14) integriert ist, wobei das Gehäuse (14) von dem Vorratsbehälter (10) separierbar ist.

3. Vorratsbehälter nach Anspruch 2, **dadurch gekennzeichnet, dass** der Vorratsbehälter (10) erste Führungsmittel (30) aufweist und das Gehäuse (14) zweite Führungsmittel (32) zur Positionierung der zweiten Leiterschleife (26) in einer vorgegebenen Anordnung zur ersten Leiterschleife (16).

4. Vorratsbehälter nach einem der Ansprüche 1 bis 3,
**dadurch gekennzeichnet, dass** die Kontakte (20, 21) in die Flüssigkeit hineinragen.

5. Vorratsbehälter nach einem der Ansprüche 1 bis 4,
**dadurch gekennzeichnet, dass** die erste Leiterschleife (16) in eine Wand des Vorratsbehälters (10) eingebettet ist.

6. Vorratsbehälter nach einem der Ansprüche 1 bis 5,
**dadurch gekennzeichnet, dass** eine Wand des Vorratsbehälters (10) im Bereich der ersten Leiterschleife (16) eine elektrische Leitfähigkeit aufweist, die geringer ist, als die elektrische Leitfähigkeit einer Flüssigkeit, deren Leitfähigkeit gemessen werden soll.

7. Vorratsbehälter nach einem der Ansprüche 1 bis 6,
**dadurch gekennzeichnet, dass** die erste und die zweite Leiterschleife (16, 26) jeweils eine Längsachse aufweisen, die in einer Betriebsposition parallel zueinander angeordnet sind.

8. Vorratsbehälter nach einem der Ansprüche 1 bis 7,
**dadurch gekennzeichnet, dass** die erste und zweite Leiterschleife (16, 26) in einer Betriebsposition koaxial zueinander angeordnet sind.

9. Vorratsbehälter nach einem der Ansprüche 1 bis 8,
**dadurch gekennzeichnet, dass** der Vorratsbehälter ein Tank in einem Fahrzeug ist.

10. Vorratsbehälter nach einem der Ansprüche 1 bis 9,
**dadurch gekennzeichnet, dass** der Vorratsbehälter in einem SCR System vorgesehen ist.

## Claims

1. Storage vessel (10) for a liquid, which storage vessel comprises an arrangement for measuring the electrical conductivity of the liquid that is located in the storage vessel, wherein the arrangement comprises a first contact (20) and a second contact (21), which are wetted by the liquid (24) and the conductivity between said contacts is measured, **characterized in that** a second conductor loop (26) is provided for the purpose of inducing a voltage into a first conductor loop (16), wherein the storage vessel (10) comprises the first conductor loop (16) having a first open end (18) that is electrically coupled to the first contact (20), and a second open end (19) that is electrically coupled to the second contact (21), and the second conductor loop (26) is coupled to an electronic measuring system (28) for the purpose of determining the conductivity of the liquid, which electronic measuring system is used for determining and evaluating the current flow in the first conductor loop (16).

2. Storage vessel according to Claim 1, **characterized in that**, the second conductor loop (26) is integrated into a housing (14), wherein the housing (14) can be separated from the storage vessel (10).

3. Storage vessel according to Claim 2, **characterized in that** the storage vessel (10) comprises first guiding means (30) and the housing (14) comprises second guiding means (32) for positioning the second conductor loop (26) in a predefined arrangement with respect to the first conductor loop (16).

4. Storage vessel according to any one of Claims 1 to 3, **characterized in that** the contacts (20, 21) protrude into the liquid.

5. Storage vessel according to any one of the Claims 1 to 4, **characterized in that** the first conductor loop (16) is embedded in a wall of the storage vessel (10).

6. Storage vessel according to any one of Claims 1 to 5, **characterized in that** a wall of the storage vessel (10) in the region of the first conductor loop (16) has a magnitude of electrical conductivity that is less than the magnitude of the electrical conductivity of a liquid whose conductivity is to be measured.

7. Storage vessel according to any one of the Claims 1 to 6, **characterized in that** the first and the second conductor loop (16, 26) comprise in each case a longitudinal axis and said longitudinal axes are arranged in an operating position parallel to one another.

8. Storage vessel according to any one of the Claims 1 to 7, **characterized in that** the first conductor loop and the second conductor loop (16, 26) are arranged coaxially with respect to one another in an operating position.

9. Storage vessel according to any one of the Claims 1 to 8, **characterized in that** the storage vessel is a tank in a vehicle.

10. Storage vessel according to any one of the Claims 1 to 9, **characterized in that** the storage vessel is provided in an SCR system.

## Revendications

1. Récipient de stockage (10) pour liquide doté d'un système pour mesurer la conductivité électrique du liquide se trouvant dans le récipient de stockage, dans lequel le système comporte un premier contact (20) et un second contact (21) qui sont mouillés par le liquide (24) et entre lesquels la conductivité est mesurée, **caractérisé en ce qu'**il est prévu une seconde boucle conductrice (26) destinée à induire une tension dans une première boucle conductrice (16), dans lequel le récipient de stockage (10) comporte la première boucle conductrice (16) ayant une première extrémité ouverte (18) qui est couplée électriquement au premier contact (20), et une seconde extrémité ouverte (19) qui est couplée électriquement au second contact (21), et la seconde boucle conductrice (26), pour déterminer la conductivité du liquide, est couplée à une électronique de mesure (28) qui sert à déterminer et à évaluer l'intensité du courant dans la première boucle conductrice (16).

2. Récipient de stockage selon la revendication 1, **caractérisé en ce que** la seconde boucle conductrice (26) est intégrée à un boîtier (14), dans lequel le boîtier (14) peut être séparé du récipient de stockage (10).

3. Récipient de stockage selon la revendication 2, **caractérisé en ce que** le récipient de stockage (10) comporte des premiers moyens de guidage (30) et **en ce que** le boîtier (14) comporte des seconds moyens de guidage (32) pour positionner la seconde boucle conductrice (26) dans une disposition prédéterminée par rapport à la première boucle conductrice (16).

4. Récipient de stockage selon l'une quelconque des revendications 1 à 3, **caractérisé en ce que** les contacts (20, 21) pénètrent dans le liquide.

5. Récipient de stockage selon l'une quelconque des revendications 1 à 4, **caractérisé en ce que** la première boucle conductrice (16) est encastrée dans une paroi du récipient de stockage (10).

6. Récipient de stockage selon l'une quelconque des revendications 1 à 5, **caractérisé en ce qu'**une paroi du récipient de stockage (10) présente, dans la région de la première boucle conductrice (16), une conductivité électrique inférieure à la conductivité électrique d'un liquide dont la conductivité doit être mesurée.

7. Récipient de stockage selon l'une quelconque des revendications 1 à 6, **caractérisé en ce que** les première et seconde boucles conductrices (16, 26) présentent respectivement des axes longitudinaux qui, à une position de fonctionnement, sont disposés parallèlement l'un à l'autre.

8. Récipient de stockage selon l'une quelconque des revendications 1 à 7, **caractérisé en ce que** les première et seconde boucles conductrices (16, 26), à une position de fonctionnement, sont disposées coaxialement l'une par rapport à l'autre.

9. Récipient de stockage selon l'une quelconque des revendications 1 à 8, **caractérisé en ce que** le récipient de stockage est un réservoir dans un véhicule.

10. Récipient de stockage selon l'une quelconque des revendications 1 à 9, **caractérisé en ce que** le récipient de stockage est disposé dans un système SCR.
